# EUROPEAN PATENT APPLICATION

(11) **EP 1 505 197 A1**
(43) Date of publication of application: **09.02.2005**
(21) Application number: 04254643.2
(22) Date of filing: 02.08.2004
(51) Int. Cl.: D21C 9/00, C08B 15/04

(54) **Methods for making carboxylated cellulosic fibers**

(30) Priority: 05.08.2003 US 635109
(71) Applicant: Weyerhaeuser Company, Federal Way, WA 98063-9777 (US)
(72) Inventor: Jewell, Richard A., Tacoma, Washington 98422 (US); Weerawarna, S. Ananda, Seattle, Washington 98125 (US)
(74) Representative: Bayliss, Geoffrey Cyril

(57) **Abstract**

Methods for making carboxylated cellulosic fibers using the N-halo hindered cyclic amine compounds. N-halo hindered cyclic amine compounds react with a secondary oxidizing agent to provide a primary oxidizing agent that reacts with cellulosic fibers to provide carboxylated cellulosic fibers.

## Description

The present invention relates to methods for making carboxylated cellulosic fibers, and compounds useful in the methods for making carboxylated cellulosic fibers.

Cellulose is a carbohydrate consisting of a long chain of glucose units, all β-linked through the 1'-4 positions. Native plant cellulose molecules may have upwards of 2200 anhydroglucose units. The number of units is normally referred to as degree of polymerization (D.P.). Some loss of D.P. inevitably occurs during purification. A D.P. approaching 2000 is usually found only in purified cotton linters. Wood derived celluloses rarely exceed a D.P. of about 1700.

Chemical derivatives of cellulose have been commercially important for almost a century and a half. Nitrocellulose plasticized with camphor was the first synthetic plastic and has been in use since 1868. A number of cellulose ether and ester derivatives are presently commercially available and find wide use in many fields of commerce. Virtually all cellulose derivatives take advantage of the reactivity of the three available hydroxyl groups (i.e., C2, C3, and C6). Substitution at these groups can vary from very low, about 0.01, to a maximum of 3. Among important cellulose derivatives are cellulose acetate, used in fibers and transparent films; nitrocellulose, widely used in lacquers and gunpowder; ethyl cellulose, widely used in impact resistant tool handles; methyl cellulose, hydroxyethyl, hydroxypropyl, and sodium carboxymethyl cellulose, water soluble ethers widely used in detergents, as thickeners in foodstuffs, and in papermaking.

Cellulose itself has been modified for various purposes. Cellulose fibers are naturally anionic in nature as are many papermaking additives. A cationic cellulose is described in U.S. Patent No. 4,505,775, issued to Harding et al. This cellulose has greater affinity for anionic papermaking additives such as fillers and pigments and is particularly receptive to acid and anionic dyes. U.S. Patent No. 5,667,637, issued to Jewell et al., describes a low degree of substitution (D.S.) carboxyethyl cellulose which, along with a cationic resin, improves the wet to dry tensile and burst ratios when used as a papermaking additive. U.S. Patent No. 5,755,828, issued to Westland, describes a method for increasing the strength of articles made from crosslinked cellulose fibers having free carboxylic acid groups obtained by covalently coupling a polycarboxylic acid to the fibers.

For some purposes, cellulose has been oxidized to make it more anionic to improve compatibility with cationic papermaking additives and dyes. Various oxidation treatments have been used. Among these are nitrogen dioxide and periodate oxidation coupled with resin treatment of cotton fabrics for improvement in crease recovery as suggested by Shet, R.T. and A.M. Nabani, *Textile Research Journal*, November 1981, pp. 740-744,. Earlier work by Datye, K.V. and G.M. Nabar, *Textile Research Journal*, July 1963, pp. 500-510, describes oxidation by metaperiodates and dichromic acid followed by treatment with chlorous acid for 72 hours or 0.05 M sodium borohydride for 24 hours. Copper number was greatly reduced by borohydride treatment and less so by chlorous acid. Carboxyl content was slightly reduced by borohydride and significantly increased by chlorous acid. The products were subsequently reacted with formaldehyde. Southern pine kraft springwood and summer wood fibers were oxidized with potassium dichromate in oxalic acid. Luner, P., et al., *TAPPI 50*(3):117-120, 1967. Handsheets made with the fibers showed improved wet strength believed to be due to aldehyde groups. Pulps have also been oxidized with chlorite or reduced with sodium borohydride. Luner, P., et al., *Tappi 50*(5):227-230, 1967. Handsheets made from pulps treated with the reducing agent showed improved sheet properties over those not so treated. Young, R.A., *Wood and Fiber 10*(2):112-119, 1978 describes oxidation primarily by dichromate in oxalic acid to introduce aldehyde groups in sulfite pulps for wet strength improvement in papers. Shenai, V.A. and A.S. Narkhede, *Textile Dyer and Primer,* May 20, 1987, pp. 17-22 describe the accelerated reaction of hypochlorite oxidation of cotton yarns in the presence of physically deposited cobalt sulfide. The authors note that partial oxidation has been studied for the past hundred years in conjunction with efforts to prevent degradation during bleaching. They also discuss in some detail the use of 0.1 M sodium borohydride as a reducing agent following oxidation. The treatment was described as a useful method of characterizing the types of reducing groups as well as acidic groups formed during oxidation. The borohydride treatment noticeably reduced copper number of the oxidized cellulose. Copper number gives an estimate of the reducing groups such as aldehydes present on the cellulose. Borohydride treatment also reduced alkali solubility of the oxidized product, but this may have been related to an approximate 40% reduction in carboxyl content of the samples. Andersson, R., et al. in *Carbohydrate Research 206:* 340-346 (1990) describes oxidation of cellulose with sodium nitrite in orthophosphoric acid and describe nuclear magnetic resonance elucidation of the reaction products.

Davis, N.J., and S.L. Flitsch, *Tetrahedron Letters 34*(7): 1181-1184, 1993 describe the use and reaction mechanism of 2,2,6,6-tetramethylpiperidinyloxy free radical (TEMPO) with sodium hypochlorite to achieve selective oxidation of primary hydroxyl groups of monosaccharides. Following the Davis et al. paper this route to carboxylation then began to be more widely explored. de Nooy, A.E.J., et al., *Receuil des Travaux Chimiques des Pays-Bas 113*: 165-166, 1994 reports similar results using TEMPO and hypobromite for oxidation of primary alcohol groups in potato starch and inulin. The following year, these same authors in *Carbohydrate Research 269*:89-98, 1995 report highly selective oxidation of primary alcohol groups in water soluble glucans using TEMPO and a hypochlorite/ bromide oxidant.

WO 95/07303 (Besemer et al.) describes a method of oxidizing water soluble carbohydrates having a primary alcohol group, using TEMPO with sodium hypochlorite and sodium bromide. Cellulose is mentioned in passing in the background although the examples are principally limited to starches. The method is said to selectively oxidize the primary alcohol at C-6 to carboxylic acid group. None of the products studied were fibrous in nature.

WO 99/23117 (Viikari et al.) describes oxidation using TEMPO in combination with the enzyme laccase or other enzymes along with air or oxygen as the effective oxidizing agents of cellulose fibers, including kraft pine pulps.

A year following the above noted Besemer publication, the same authors, in *Cellulose Derivatives,* Heinze, T.J. and W. G. Glasser, eds., 1996, Chap. 5, pp. 73-82, describe methods for selective oxidation of cellulose to 2,3-dicarboxy cellulose and 6-carboxy cellulose using various oxidants. Among the oxidants used were a periodate/chlorite/hydrogen peroxide system, oxidation in phosphoric acid with sodium nitrate/nitrite, and with TEMPO and a hypochlorite/bromide primary oxidant. Results with the TEMPO system were poorly reproduced and equivocal. In the case of TEMPO oxidation of cellulose, little or none would have been expected to go into solution. The homogeneous solution of cellulose in phosphoric acid used for the sodium nitrate/sodium nitrite oxidation was later treated with sodium borohydride to remove any carbonyl function present.

Chang, P.S. and J.F. Robyt, *Journal of Carbohydrate Chemistry 15*(7):819-830, 1996, describe oxidation of ten polysaccharides including α-cellulose at 0 and 25° C using TEMPO with sodium hypochlorite and sodium bromide. Ethanol addition was used to quench the oxidation reaction. The resulting oxidized α-cellulose had a water solubility of 9.4%. The authors did not further describe the nature of the α-cellulose. It is presumed to have been a so-called dissolving pulp or cotton linter cellulose. Barzyk, D., et al., in *Transactions of the 11th Fundamental Research Symposium 2*:893-907, 1997, note that carboxyl groups on cellulose fibers increase swelling and impact flexibility, bonded area and strength. They designed experiments to increase surface carboxylation of fibers. However, they ruled out oxidation to avoid fiber degradation and chose to form carboxymethyl cellulose in an isopropanol/methanol system.

Isogai, A. and Y. Kato, in *Cellulose 5*:153-164, 1998 describe treatment of several native, mercerized, and regenerated celluloses with TEMPO to obtain water soluble and insoluble polyglucuronic acids. They note that the water soluble products had almost 100% carboxyl substitution at the C-6 site. They further note that oxidation proceeds heterogeneously at the more accessible regions on solid cellulose.

Kitaoka, T., A. Isogai, and F. Onabe, in *Nordic Pulp and Paper Research Journal* 14(4):279-284, 1999, describe the treatment of bleached hardwood kraft pulp using TEMPO oxidation. Increasing amounts of carboxyl content gave some improvement in dry tensile index, Young's modulus, and brightness, with decreases in elongation at breaking point and opacity. Other strength properties were unaffected. Retention of PAE-type wet strength resins was somewhat increased. The products described did not have any stabilization treatment after the TEMPO oxidation.

U.S. Patent No. 6,379,494 describes a method for making stable carboxylated cellulose fibers using a nitroxide-catalyzed process. In the method, cellulose is first oxidized by nitroxide catalyst to provide carboxylated as well as aldehyde and ketone substituted cellulose. The oxidized cellulose is then stabilized by reduction of the aldehyde and ketone substituents to provide the carboxylated fiber product.

Nitroxide-catalyzed cellulose oxidation occurs predominately at the primary hydroxyl group on C-6 of the anhydroglucose moiety. In contrast to some of the other routes to oxidized cellulose, only very minor oxidation occurs at the secondary hydroxyl groups at C-2 and C-3.

In nitroxide oxidation of cellulose, primary alcohol oxidation at C-6 proceeds through an intermediate aldehyde stage. In the process, the nitroxide is not irreversibly consumed in the reaction, but is continuously regenerated by a secondary oxidant (e.g., hypohalite) into the nitrosonium (or oxyammonium) ion, which is the actual oxidant. In the oxidation, the nitrosonium ion is reduced to the hydroxylamine, which can be re-oxidized to the nitroxide. Thus, in the method, it is the secondary oxidant (e.g., hypohalite) that is consumed. The nitroxide may be reclaimed or recycled from the aqueous system.

The resulting oxidized cellulose product is an equilibrium mixture including carboxyl and aldehyde substitution. Aldehyde substituents on cellulose are known to cause degeneration over time and under certain environmental conditions. In addition, minor quantities of ketone may be formed at C-2 and C-3 of the anhydroglucose units and these will also lead to degradation. Marked degree of polymerization loss, fiber strength loss, crosslinking, and yellowing are among the consequent problems. Thus, to prepare a stabilized carboxylated product, aldehyde and ketone substituents formed in the oxidation step are reduced to hydroxyl groups in a stabilization step.

In addition to TEMPO, other nitroxide derivatives for making carboxylated cellulose fibers have been described. See, for example, U.S. Patent No. 6,379,494 and WO 01/29309, Methods for Making Carboxylated Cellulose Fibers and Products of the Method.

A method of preparation of carboxylic acids or their salts by oxidation of primary alcohols using hindered N-chloro hindered cyclic amines and hypochlorite, in aqueous solutions or in mixed solvent systems containing ethyleneglycol dimethyl ether, diethyleneglycol dimethyl ether, triethyleneglycol dimethyl ether, toluene, acetonitrile, ethylacetate, t-butanol and other solvents is described in JP10130195, "Manufacturing Method of Carboxylic Acid and Its Salts". Other oxidants described include chlorine, hypobromite, bromite, trichloro isocyanuric acid, tribromo isocyanuric acid, or combinations. This process has not been used to prepare stabilized carboxylated cellulosic pulp products.

Despite the advances made in the development of methods for making carboxylated cellulose pulps including catalytic oxidation systems, there remains a need for improved methods and catalysts for making carboxylated cellulose pulp. The present invention seeks to fulfill these needs and provides further related advantages.

In one aspect of the present invention, compounds useful in nitroxide-catalyzed oxidation of cellulose to make carboxylated cellulosic fibers are provided. The compounds are N-halo hindered cyclic amine compounds that can be converted into the catalyst for oxidizing cellulose.

In another aspect, the present invention provides methods for making carboxylated cellulosic fibers using the N-halo hindered cyclic amine compounds. In the method, the N-halo hindered cyclic amine compounds react with a secondary oxidizing agent to provide a primary oxidizing agent that reacts with cellulosic fibers to provide carboxylated cellulosic fibers. In one embodiment, the carboxylated cellulosic fibers are further treated to provide stable carboxylated cellulosic fibers.

In one aspect of the present invention, N-halo hindered cyclic amine compounds for use in making carboxylated cellulose pulp fibers are provided. The N-halo hindered cyclic amine compounds are as effective as TEMPO and other related nitroxides in methods for making carboxylated cellulose fibers.

The N-halo hindered cyclic amine compounds are fully alkylated at the carbon atoms adjacent to the amino nitrogen atom (i.e., the N-Cl or N-Br) and have from 4 to 8 atoms in the ring. In one embodiment, the N-halo hindered cyclic amine compounds are six-membered ring compounds. In another embodiment, the N-halo hindered cyclic amine compounds are five-membered ring compounds.

Representative N-halo hindered cyclic amine compounds useful in the method of the invention for making carboxylated cellulose pulp fibers include Structures (I)-(VII).

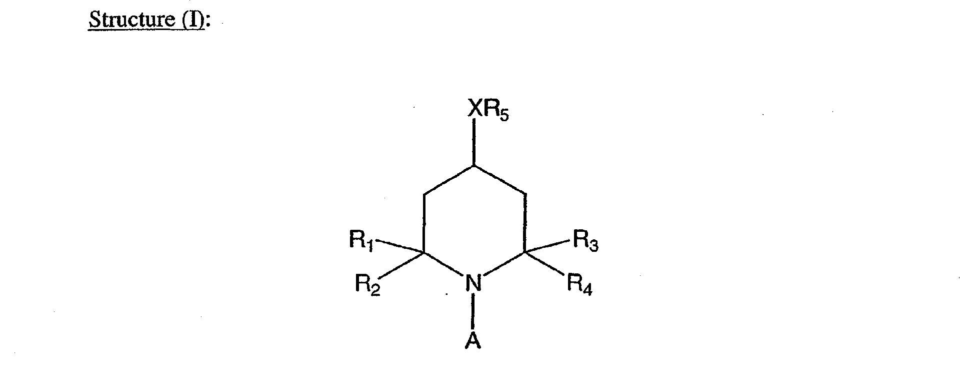

For Structure (I), R₁-R₄ can be C1-C6 straight-chain or branched alkyl groups, for example, methyl, ethyl, propyl, butyl, pentyl, or hexyl groups. Alternatively, R₁ and R₂ taken together can form a five- or six-carbon cycloalkyl group, and R₃ and R₄ taken together can form a five- or six-carbon cycloalkyl group. The cycloalkyl group can be further substituted with, for example, one or more C1-C6 alkyl groups or other substituents. X can be sulfur or oxygen. R₅ can be hydrogen, C1-C12 straight-chain or branched alkyl or alkoxy, aryl, aryloxy, benzyl, 2-dioxanyl, dialkyl ether, alkyl polyether, or hydroxyalkyl group. Alternatively, R₅ can be absent and X can be hydrogen or a mirror image moiety to form a bipiperidinyl compound. A is a halogen, for example, chloro or bromo. Representative compounds of Structure (I) include N-halo-2,2,6,6-tetramethylpiperidine; N,N'-dihalo-2,2,2',2',6,6,6',6-octamethyl-4,4'-bipiperidine; N-halo-2,2,6,6-tetramethyl-4-hydroxypiperidine; N-halo-2,2,6,6-tetramethyl-4-methoxypiperidine; and N-halo-2,2,6,6-tetramethyl-4-benzyloxypiperidine.

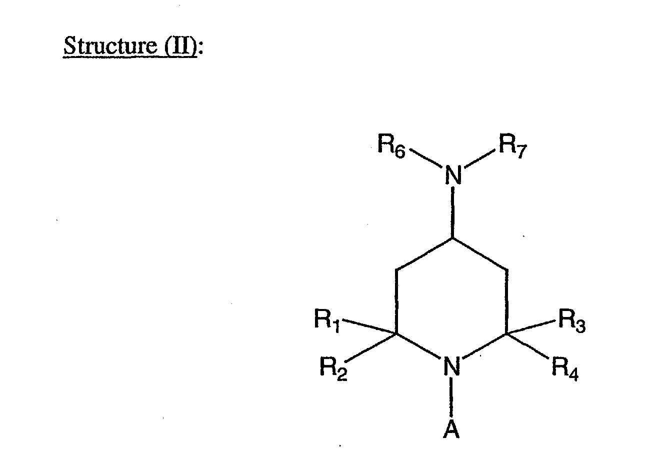

For Structure (II), R₁-R₄ can be C1-C6 straight-chain or branched alkyl groups, for example, methyl, ethyl, propyl, butyl, pentyl, or hexyl groups. Alternatively, R₁ and R₂ taken together can form a five- or six-carbon cycloalkyl group, and R₃ and R₄ taken together can form a five- or six-carbon cycloalkyl group. The cycloalkyl group can be further substituted with, for example, one or more C1-C6 alkyl groups or other substituents. X can be oxygen or sulfur. R₆ can be hydrogen, C1-C6 straight-chain or branched alkyl groups. R₇ can be hydrogen, C1-C8 straight-chain or branched alkyl groups, phenyl, carbamoyl, alkyl carbamoyl, phenyl carbamoyl, or C1-C8 acyl. A is a halogen, for example, chloro or bromo. Representative compounds of Structure (II) include N-halo-2,2,6,6-tetramethyl-4-aminopiperidine and N-halo-2,2,6,6-tetramethyl-4-acetylaminopiperidine.

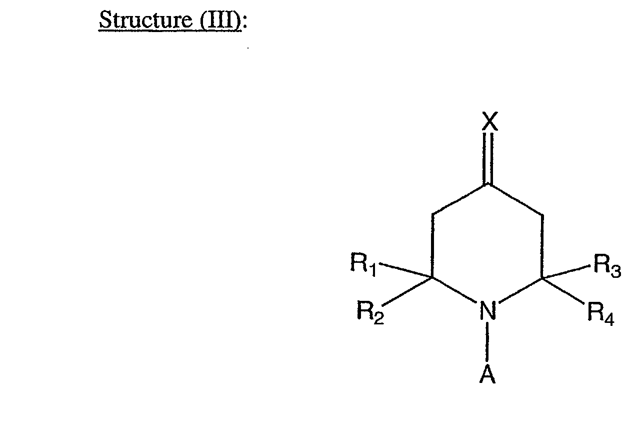

For Structure (III), R₁-R₄ can be C1-C6 straight-chain or branched alkyl groups, for example, methyl, ethyl, propyl, butyl, pentyl, or hexyl groups. Alternatively, R₁ and R₂ taken together can form a five- or six-carbon cycloalkyl group, and R₃ and R₄ taken together can form a five- or six-carbon cycloalkyl group. The cycloalkyl group can be further substituted with, for example, one or more C1-C6 alkyl groups or other substituents. X can be oxygen, sulfur, NH, alkylamino (i.e., NH-alkyl), dialkylamino, NOH, or NOR₁₀, where R₁₀ is a C1-C6 straight-chain or branched alkyl group. A is a halogen, for example, chloro or bromo. A representative compound of Structure (III) is N-halo-2,2,6,6-tetramethylpiperidin-4-one.

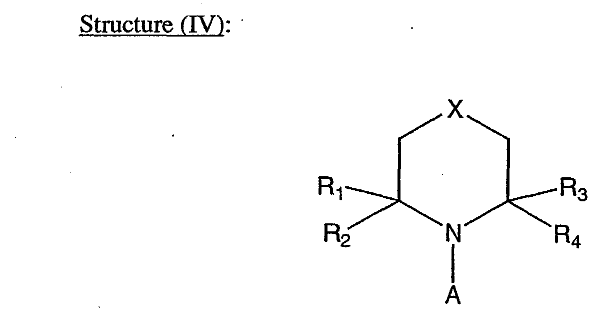

For Structure (IV), R₁-R₄ can be C1-C6 straight-chain or branched alkyl groups, for example, methyl, ethyl, propyl, butyl, pentyl, or hexyl groups. Alternatively, R₁ and R₂ taken together can form a five- or six-carbon cycloalkyl group, and R₃ and R₄ taken together can form a five- or six-carbon cycloalkyl group. The cycloalkyl group can be further substituted with, for example, one or more C1-C6 alkyl groups or other substituents. X can be oxygen, sulfur, alkylamino (i.e., N-R₁₀), or acylamino (i.e., N-C(=O)-R₁₀), where R₁₀ is a C1-C6 straight-chain or branched alkyl group. A is a halogen, for example, chloro or bromo. A representative compound of Structure (IV) is N-halo-3,3,5,5-tetramethylmorpholine.

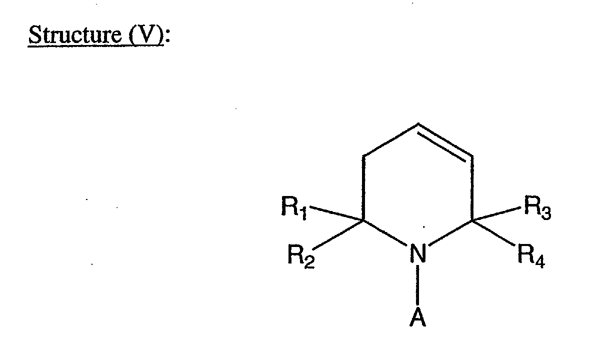

For Structure (V), R₁-R₄ can be C1-C6 straight-chain or branched alkyl groups, for example, methyl, ethyl, propyl, butyl, pentyl, or hexyl groups. Alternatively, R₁ and R₂ taken together can form a five- or six-carbon cycloalkyl group, and R₃ and R₄ taken together can form a five- or six-carbon cycloalkyl group. The cycloalkyl group can be further substituted with, for example, one or more C1-C6 alkyl groups or other substituents. A is a halogen, for example, chloro or bromo. A representative compound of Structure (V) is N-halo-3,4-dehydro-2,2,6,6,-tetramethylpiperidine.

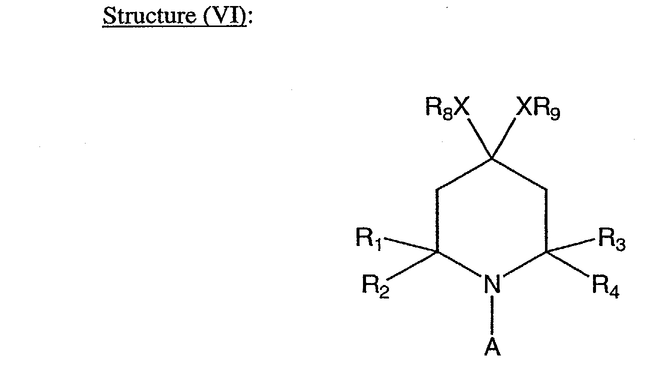

For Structure (VI), R₁-R₄ can be C1-C6 straight-chain or branched alkyl groups, for example, methyl, ethyl, propyl, butyl, pentyl, or hexyl groups. Alternatively, R₁ and R₂ taken together can form a five- or six-carbon cycloalkyl group, and R₃ and R₄ taken together can form a five- or six-carbon cycloalkyl group. The cycloalkyl group can be further substituted with, for example, one or more C1-C6 alkyl groups or other substituents. X can be methylene (i.e., CH₂), oxygen, sulfur, or alkylamino. R₈ and R₉ can be independently selected from C1-C6 straight-chain or branched alkyl groups, for example, methyl, ethyl, propyl, butyl, pentyl, or hexyl groups. Alternatively, R₈ and R₉ taken together can form a five- or six-membered ring, which can be further substituted with, for example, one or more C1-C6 alkyl groups or other substituents. A is a halogen, for example, chloro or bromo. Representative compounds of Structure (VI) include N-halo-4-piperidone ketals, such as ethylene, propylene, glyceryl, and neopentyl ketals. Representative compounds of Structure (VI) include N-halo-2,2,6,6-tetramethyl-4-piperidone ethylene ketal, N-halo-2,2,6,6-tetramethyl-4-piperidone propylene ketal, N-halo-2,2,6,6-tetramethyl-4-piperidone glyceryl ketal, and N-halo-2,2,6,6-tetramethyl-4-piperidone neopentyl ketal.

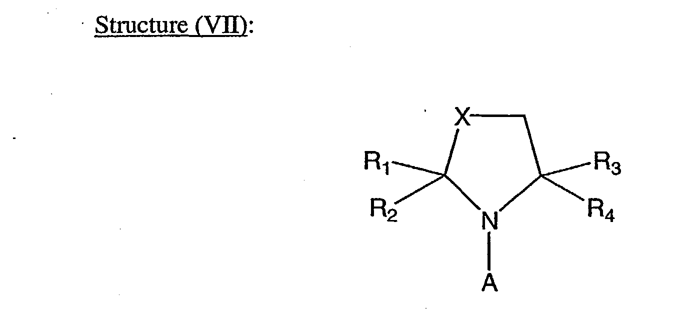

For Structure (VII), R₁-R₄ can be C1-C6 straight-chain or branched alkyl groups, for example, methyl, ethyl, propyl, butyl, pentyl, or hexyl groups. Alternatively, R₁ and R₂ taken together can form a five- or six-carbon cycloalkyl group, and R₃ and R₄ taken together can form a five- or six-carbon cycloalkyl group. The cycloalkyl group can be further substituted with, for example, one or more C1-C6 alkyl groups or other substituents. X can be methylene, oxygen, sulfur, NH, (i.e., N-R₁₀), or acylamino (i.e., N-C(=O)-R₁₀), where R₁₀ is a C1-C6 straight-chain or branched alkyl group. A is a halogen, for example, chloro or bromo. A representative compound of Structure (VII) is N-halo-2,2,5,5-tetramethylpyrrolidine.

In general, the N-halo hindered cyclic amine compounds noted above can be prepared by chlorination or bromination of the corresponding amine compounds. Standard methods of preparing N-halo hindered amines are described in the literature. See, for example, (1) Rigo, A., et al., *Inorganica Chimica Acta 35*:61-164, 1979; (2) Fujiwara, M., et al., *J. Am. Oil*. *Chem*. *Soc*. *72*(1):97-103, 1995; and (3) U.S. Patent No. 4,931,562. For example, 4-hydroxy-2,2,6,6-tetramethyl-N-bromopiperidine can be prepared according to the procedure described in Rigo, A., et al., *Inorganica Chimica Acta 35*:61-164, 1979; and chloro-4-N,N-bis(2-hydroxyethyl)amino-2,2,6,6-tetramethylpiperidine can be prepared according to the procedure described in U.S. Patent No. 4,931,562. Other N-chloro hindered amine compounds described herein can be prepared by similar synthetic and purification methods.

The invention provides a method for making carboxylated cellulose pulp fibers using an N-halo hindered cyclic amine compound in aqueous media under heterogeneous conditions. In the method, the N-halo hindered cyclic amine compound reacts with a secondary oxidizing agent (e.g., chlorine dioxide, peracids, hypochlorites, chlorites, ozone, hydrogen peroxide, potassium superoxide) to provide a primary oxidizing agent that reacts with cellulose pulp fibers to provide carboxylated cellulose pulp fibers. In one embodiment, the carboxylated cellulosic fibers are further treated to provide stable carboxylated cellulosic fibers. In the method, under basic pH conditions and in the presence of a secondary oxidizing agent, the primary oxidizing agent is generated from the N-halo hindered cyclic amine compound. In one embodiment, the carboxylated cellulosic fibers are further treated to provide stable carboxylated cellulosic fibers.

As noted above, in one embodiment, the method for making carboxylated cellulose pulp fibers includes two steps: (1) a carboxylation step; and (2) a stabilization step.

In the carboxylation step, cellulose pulp fibers are oxidized (i.e., carboxylated) under basic pH conditions and in the presence of a secondary oxidizing agent, such as chlorine dioxide, hypochlorite, peracids, or certain metal ions, with a catalytically active species (e.g., an oxammonium ion) generated from a N-halo hindered cyclic amine compound described above.

The carboxylation reaction generally takes place at a temperature from about 20° C to about 90° C. The N-halo hindered cyclic amine compound is present in an amount from about 0.002% to about 0.25% by weight based on the total weight of the pulp. The secondary oxidizing agent is present in an amount from about 0.1 to about 10% by weight based on the total weight of the pulp. Reaction times for carboxylating the pulp range from about 5 seconds to about 10 hours, depending upon reaction temperature and the amount of N-halo hindered cyclic amine compound and secondary oxidizing agent.

Suitable secondary oxidizing agents include hypohalites, chlorine dioxide, and peracids such as Caro's Acid. In one embodiment, the hypohalite is sodium hypochlorite (NaOCI). Sodium hypochlorite is inexpensive and readily available as a stable aqueous solution with about 4-10% NaOCl w/v and can be made in situ by bubbling chlorine gas into a solution of NaOH. Admixture of NaOCl with sodium bromide (NaBr) can accelerate the oxidation reaction. In one embodiment of the method, this combination is used (e.g., about 3 parts by weight NaBr to 4 parts of NaOCl is suitable). The amount of NaOCl is in the range of about 0.8 to about 6.5 g/L of pulp slurry, preferably about 1.1 to about 1.4 g/L. The amount of NaOCl based on cellulose will be within the range of about 0.5 to about 35% by weight, preferably about 1.3 to about 10.5% by weight. The amount of NaOCl will depend on the amount of carboxylation desired. The pH during oxidation should generally be maintained within the range of about 6.5 to 11, preferably about 6.5 to10, and most preferably about 7.5 to 9.5. The oxidation reaction will proceed at higher and lower pH values, but at lower efficiencies.

A proprietary composition sold as STABREX, available from Nalco Chemical Co., Chicago, IL, may be used in place of the hypochlorite oxidizing agent. STABREX is sold as an aqueous stabilized highly alkaline solution of a bromine-containing composition having 1-5% NaOH, a minimum pH of 13, and is a latent source of hypobromite. The composition contains a stabilizer believed to be a sulfonated nitrogen-containing compound. STABREX is useful where environmental or other considerations might dictate against the use of chlorine-based materials.

It will be understood that in accordance with usual reaction kinetics, oxidation will proceed at a higher rate with increased concentrations of oxidizing agents and at higher temperature. Reaction at lower temperatures (e.g., 0-10° C) is preferred to reduce cellulose D.P. degradation. However, the reaction may also be carried out at higher temperatures to produce products having a D.P. higher than 600.

Following oxidation, the cellulose can be washed to remove any residual chemicals and may then be dried or further processed. If maximum stability and D.P. retention is desired, the oxidized product is re-slurried in water for treatment with a stabilizing agent. The stabilizing agent may either be a reducing agent or an oxidizing agent. A preferred reducing agent is preferably an alkali metal borohydride. Sodium borohydride (NaBH₄) is preferred from the standpoint of cost and availability. However, other borohydrides, such as lithium borohydride (LiBH₄), or alkali metal cyanoborohydrides, such as sodium cyanoborohydride (NaBH₃CN), are also suitable. NaBH₄ may be mixed with LiCl to form a useful reducing agent. When NaBH₄ is used for reduction, it should be present in an amount between about 0.1 and 100 g/L; in one embodiment, about 0.25 to about 5 g/L; and, in another embodiment, about 0.5 to about 2 g/L. Based on cellulose the amount of reducing agent is suitably in the range of about 0.1% to 4% by weight, preferably about 1 to about 3%. Reduction may be carried out at room or higher temperature for a time between 10 minutes and 10 hours, preferably from about 30 minutes to 2 hours.

Alkali metal chlorites are preferred oxidizing agents used as stabilizers, with sodium chlorite being preferred because of the cost factor. Other compounds that may serve equally well as oxidizers include permanganates, chromic acid, bromine, and silver oxide. A combination of chlorine dioxide and hydrogen peroxide is also a suitable oxidizer when used at the pH range designated for sodium chlorite. Oxidation using sodium chlorite may be carried out at a pH in the range of about 1.5 to about 6, preferably from about 2 to about 4, at temperatures between about 25 to about 90° C for times from about 5 minutes to 50 hours, preferably from about 10 minutes to about 2 hours. One factor that favors oxidizing agents as opposed to reducing agents is that aldehyde groups on the oxidized cellulose are converted to additional carboxyl groups, thus resulting in a more highly carboxylated product. These stabilizing oxidizers are referred to as "tertiary oxidizers" to distinguish them from the N-halo hindered cyclic amine (primary)/ chlorine dioxide, peracids including Caro's acid, hypochlorites, chlorites, ozone, hydrogen peroxide (secondary) oxidizers. The tertiary oxidizer is used in a molar ratio of about 1 to 15 times the presumed aldehyde content of the oxidized cellulose, preferably about 5 to 10 times. In a more convenient way of measuring the required tertiary oxidizer needed, the referred sodium chlorite usage should fall within about 0.001 or sodium chlorite/g fiber to 0.2 g/g, preferably 0.01 to 0.09 g/g, the chlorite being calculated on a 100% active material basis.

After stabilization is completed, the cellulose is again washed and may be dried if desired. Alternatively, the carboxyl substituents may be converted to other cationic forms in addition to hydrogen or sodium, for example, calcium, magnesium, or ammonium.

The method of the invention provides a cellulosic fiber having an increase in carboxyl substitution compared to the starting cellulosic fibers of at least about 2 meq/100 g. In one embodiment, the method provides a cellulosic fiber having an increase in carboxyl substitution compared to the starting cellulosic fibers of at least about 5 meq/100 g. Because carboxylation occurs predominately at C-6 (i.e., -CH₂OH) of the anhydroglucose moiety of cellulose, the carboxylated fibers produced by the method include C-6 carboxyl groups (i.e., glucuronic acid groups).

One particular advantage of the process is that all reactions are carried out in an aqueous medium to yield a product in which the carboxylation is primarily located on the fiber surface. This conveys highly advantageous properties for papermaking.

The carboxylated fiber produced by the method of the invention is highly advantageous as a papermaking furnish, either by itself or in conjunction with conventional fiber. The carboxylated fiber may be used in an amount from about 0.5 to about 100% of the papermaking furnish. The carboxylated fiber is especially useful in admixture with recycled fiber to add strength. The carboxylated fiber's increased number of anionic sites should serve to ionically hold significantly larger amounts of cationic papermaking additives than untreated fiber. These additives can include wet strength resins, sizing chemical emulsions, filler and pigment retention aids, charged filler particles, dyes, and the like. Carboxylated pulps do not hornify (or irreversibly collapse) as much on drying and are a superior material when recycled and swell more on rewetting, take less energy to refine, and give higher sheet strength.

The following examples are provided for the purpose of illustrating, not limiting, the invention.

### EXAMPLE

### Example 1

### Representative Method for Making Carboxylated Cellulose Pulp

In this example, a representative method for making carboxylated cellulose pulp is described.

Fully bleached never dried cellulose pulp 10 g OD (35.7 g wet) was treated with 250 mL of 0.7% chlorine dioxide solution containing 0.250 g of 1-chloro-2,2,6,6-tetramethyl-4-piperidone ethylene ketal. The pH was adjusted to 8.5 with sodium carbonate and the slurry was heated in a plastic bag at 70° C for 45 minutes. The pH was adjusted to 3.5 with dilute sulfuric acid and the slurry treated with 40 mL of hydrogen peroxide (30%) solution and 100 mL of 0.7% chlorine dioxide. The pulp slurry was heated at 70° C for 45 minutes. The pH of the slurry was then adjusted to 9.5 with 50 mL of aqueous sodium carbonate solution and filtered.

The filtered pulp slurry was washed thoroughly with de-ionized water. The extent of the pulp carboxylation was determined by titration modified TAPPI method and was found to be 17.0 meq/100 g.

While the preferred embodiment of the invention has been illustrated and described, it will be appreciated that various changes can be made therein without departing from the spirit and scope of the invention.

## Claims

1. A method for making carboxylated cellulosic fibers, comprising:
reacting an N-halo hindered cyclic amine compound with a secondary oxidizing agent to provide a primary oxidizing agent; and
contacting the primary oxidizing agent wit cellulosic fibers to provide carboxylated cellulosic fibers.

2. A method as claimed in claim 1, wherein the N-halo hindered cyclic amine compound comprises a cyclic amine compound that is fully alkylated at the carbon atoms adjacent to the amino nitrogen atom.

3. A method as claimed in claim 1 or claim 2, wherein the N-halo hindered cyclic amine compound comprises a cyclic amine compound having from 4 to 8 atoms in the ring.

4. A method as claimed in claim 3, wherein the N-halo hindered cyclic amine compound comprises a five-membered or six-membered ring compound.

5. A method as claimed in claim 4, wherein the N-halo hindered cyclic amine compound has at least one of the following structures 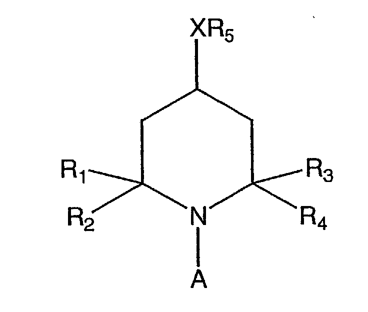 wherein each of R₁, R₂, R₃ and R₄ is independently at least one of a C₁-C₆ straight chain or branched alkyl, and/or R₁ and R₂ taken together form a five- or six-carbon cycloalkyl, and/or R₃ and R₄ taken together form a five- or six-carbon cycloalkyl; X is oxygen or sulphur; R₅ is at least one of hydrogen, C₁-C₁₂ straight-chain or branched alkyl or alkoxy, aryl, aryloxy, benzyl, 2-dioxanyl, dialkyl ether, alkyl polyether, or hydroxyalkyl; and A is at least one of chloro or brom, 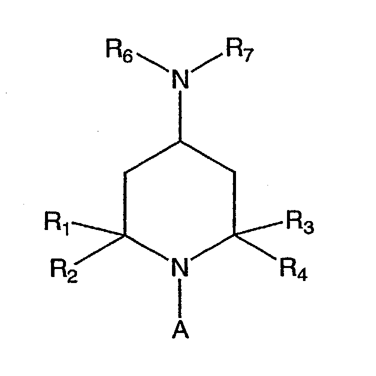 wherein each of R₁, R₂, R₃ and R₄ is independently at least one of a C₁-C₆ straight-chain or branched alkyl, and/or R₁ and R₂ taken together form a five- or six-carbon cycloalkyl, and/or R₃ and R₄ taken together form a five- or six-carbon cycloalkyl; X is oxygen or sulphur; R₆ is at least one of C₁-C₆ straight-chain or branched alkyl; R₇ is at least one of hydrogen, C₁-C₈ straight-chain or branched alkyl, phenyl, carbamoyl, alkyl carbamoyl, phenyl carbamoyl, or C₁-C₈ acyl; and A is at least one of chloro or bromo, 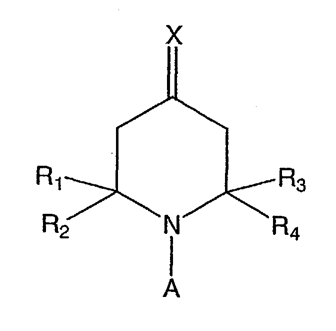 wherein each of R₁, R₂, R₃ and R₄ is independently at least one of a C₁-C₆ straight-chain or branched alkyl, and/or R₁ and R₂ taken together form a five- or six-carbon cycloalkyl, and/or R₃ and R₄ taken together can form a five- or six-carbon cycloalkyl; X is at least one of oxygen, sulphur, NH, alkylamino, dialkylamino, NOH, or NOR₁₀, wherein R₁₀ is a C₁₋C₆ straight-chain or branched alkyl; and A is at least one of chloro or bromo, 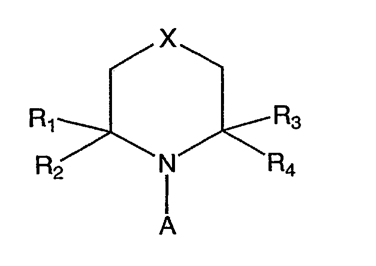 wherein each of R₁, R₂, R₃ and R₄ is independently at least one of a C₁-C₆ straight-chain or branched alkyl, and/or R₁ and R₂ taken together form a five- or six-carbon cycloalkyl, and/or R₃ and R₄ taken together form a five- or six-carbon cycloalkyl; X is at least one of oxygen, sulphur, N-R₁₀, or N-C(=O)-R₁₀, wherein R₁₀ is a C₁-C₆ straight-chain or branched alkyl; and A is at least one of chloro or bromo, 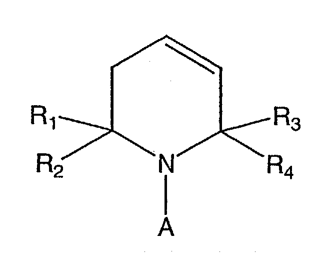 wherein each of R₁, R₂, R₃ and R₄ is independently at least one of a C₁-C₆ straight-chain or branched alkyl, and/or R₁ and R₂ is taken together form a five- or six-carbon cycloalkyl, and/or R₃ and R₄ taken together form a five- or six-carbon cycloalkyl; and A is at least one of chloro or bromo 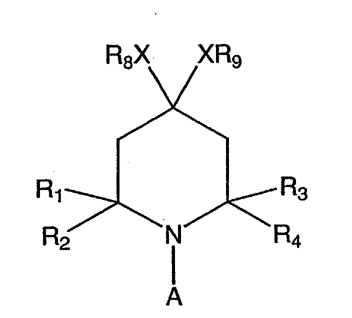 wherein each of R₁, R₂, R₃ and R₄ is independently at least one of a C₁-C₆ straight-chain or branched alkyl, and/or R₁ and R₂ taken together form a five- or six-carbon cycloalkyl, and/or R₃ and R₄ taken together form a five- or six-carbon cycloalkyl; X is at least one of methylene, oxygen, sulphur, or alkylamino; R₈ and R₉ are independently at least one of C₁-C₆ straight-chain or branched alkyl groups, or R₈ and R₉ taken together form a five- or six-carbon membered ring; and A is at least one of chloro or bromo, and 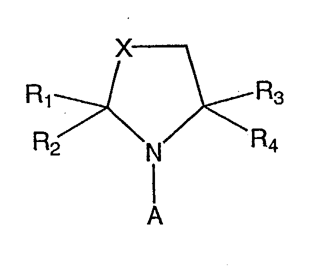 wherein each of R₁, R₂, R₃ and R₄ is independently at least one of a C₁-C₆ straight-chain or branched alkyl, and/or R₁ and R₂ taken together form a five- or six-carbon cycloalkyl, and/or R₃ and R₄ taken together form a five- or six-carbon cycloalkyl; X is at least one of methylene, oxygen, sulphur, NH, N-R₁₀, or N-C(=O)-R₁₀, wherein R₁₀ is a C₁-C₆ straight chain or branched alkyl; and A is at least one of chloro or bromo.

6. A method as claimed in claim 4 or claim 5, wherein the N-halo hindered cyclic amine compound is an N-chloro-2,2,6,6-tetramethyl-4-piperidone ketal or a N-chloro-2,2,6,6-tetramethyl-4-piperidone ethylene glycol ketal.

7. A method as claimed in any one of the preceding claims, wherein the secondary oxidizing agent is at least one of chlorine dioxide, a peracid, hydrogen peroxide, or ozone.

8. A method as claimed in any one of the preceding claims, wherein the primary oxidizing agent is at least one of chlorine dioxide, a peracid, hydrogen peroxide, ozone, or a hypohalite.

9. A method as claimed in claim 8, wherein the hypohalite comprises sodium hypochlorite.

10. A method as claimed in any one of the preceding claims, wherein the carboxylated fibers comprise C-6 carboxyl groups.

11. A method as claimed in any one of the preceding claims, further comprising stabilizing the carboxylated cellulosic fibers.

12. A method as claimed in claim 11, wherein the carboxylated cellulosic fibers are static, each with a stabilizing agent which is a chlorite.

13. A method as claimed in claim 11, wherein stabilizing the carboxylated cellulosic fibers comprises treating the fibers with a reducing agent or an oxidizing agent.

14. A method as claimed in claim 13, wherein the reducing agent is at least one of sodium borohydride, lithium borohydride, or sodium cyanoborohydride or the oxidizing agent is at least one of sodium chlorite, chlorine dioxide, or hydrogen peroxide.
